(19) Europäisches Patentamt

European Patent Office

Office européen des brevets

(11) Veröffentlichungsnummer: **0 507 073 A1**

(12) **EUROPÄISCHE PATENTANMELDUNG**

(21) Anmeldenummer: **92103133.2**

(22) Anmeldetag: **25.02.92**

(51) Int. Cl.$^5$: **C02F 3/34**, C02F 3/12, C02F 9/00, B01D 25/12

(30) Priorität: **04.04.91 IE 1120/91**

(43) Veröffentlichungstag der Anmeldung: **07.10.92 Patentblatt 92/41**

(84) Benannte Vertragsstaaten: **AT BE DE ES LU NL**

(71) Anmelder: **H.P.-BIOTECHNOLOGIE GmbH** Brauckstrasse 51 W-5810 Witten(DE)

(72) Erfinder: **Ebner, Hans Georg, Dr.**

Mergelweg 13 W-4300 Essen 14(DE) Erfinder: **Knackstedt, Hans-Günther** Wittener Bruch 6 W-5810 Witten(DE) Erfinder: **Sprenger, Berthold, Dr.** Portmansweg 45 W-4600 Dortmund 72(DE)

(74) Vertreter: **Schneider, Wilhelm** Merckelbachweg 3 W-4770 Soest(DE)

(54) **Anlage zur biologischen Schadstoffbeseitigung von verunreinigten Abwässern.**

(57) Die Erfindung betrifft eine Anlage zur kontinuierlichen aeroben Schadstoffbeseitigung von insbesondere mit Kohlenwasserstoffen verunreinigten Abwässern durch Mikroorganismen.

Die erfinderische Lösung besteht darin, daß die verunreinigten Abwässer mit Mikroorganismen und Nährstofflösung kontinuierlich in einer Anlage behandelt werden, die aus einem Flüssigkeitsreaktor (1) mit einer vorgeschalteten Gas-Flüssigkeits-Mischeinrichtung (2) und einem nachgeschalteten Filtersystem (3) für Feststoffe besteht.

Der mit einem Abluftfilter (4) und einer Heizung (10) ausgerüstete Flüssigkeitsreaktor (1) weist Zuführungen für das Gas-Flüssigkeitsgemisch (11) und das im Kreislauf geführte Wasser (12), sowie einen Biomasse-Abzug (5) und einen Wasserüberlauf (6) auf, die über eine Rohrleitung (7) mit dem nachgeordneten Filtersystem (3) und dem Biomasse-Rückführungseinlaß (9) verbunden sind.

Das nachgeschaltete Filtersystem (3) besteht vorzugsweise aus einer mit einem Anschwemmaterial ausgestatteten Kammerfilterpresse (13).

Zwischen dem Flüssigkeitsreaktor (1) und dem Abluftfilter (4) ist ein Abluftventilator (14) angeordnet.

Mehrere in sich geschlossene Modulanlagen können parallel angeordnet sein.

Fig.1

Rank Xerox (UK) Business Services

EP 0 507 073 A1

Die Erfindung betrifft eine Anlage zur aeroben kontinuierlichen Schadstoffbeseitigung von mit Kohlenwasserstoffen verunreinigten Abwässern durch Mikroorganismen, sowie die Abtrennung der kontaminierten Feststoffe.

Für die Entfernung von Schadstoffen aus verunreinigten Abwässern sind eine Reihe von biologischen Verfahren und Vorrichtungen bekannt, die in flachen offenen Belebungs- und Sedimentationsbecken durchgeführt werden. Die Nachteile solcher offenen Anlagen sind insbesondere die Geruchsbelästigung, die Lärmbelästigung, der große Platzbedarf sowie hohe Investitions- und Energiekosten.

Bei anderen bekannten Verfahren werden die Abwässer in hohen zylindrischen Türmen oder tiefen Schächten ähnlich einer Blasensäule gereinigt. Der Raumbedarf dieser Reaktoren ist ebenfalls noch verhältnismäßig groß und erfordert daher auch entsprechend hohe Investitions- und Energiekosten.

Weiterhin ist bekannt, die Abwasserreinigung in einem geschlossenen Reaktor durchzuführen, der ein inneres Strömungsrohr aufweist, in das mittels einer Düse Abwasser und Luft eingebracht werden (EP 00 03 547).

Bekannt ist auch die Verwendung eines axial durchströmten, zweistufigen Submersreaktors mit einem nachgeordneten Sedimentationsbecken zur Abtrennung des Bodenschlamms von gereinigtem Abwasser. Die Disponierung der Luft und der Mikroorganismen in dem mit Kohlenwasserstoffen verunreinigten Abwasser erfolgt durch eine Treibstrahldüse (DE-OS 37 37 309).

Ein weiteres bekanntes Verfahren ist dadurch gekennzeichnet, daß die mikrobielle Umsetzung unter Überdruck in einem Bioreaktor mit einer Mehrstoffdüsen- und Injektionsmischeinrichtungen durchgeführt wird; die Abtrennung des behandelten Abwassers vom biologischen Schlamm erfolgt mittels Membran- oder Ultrafiltration (DE-OS 37 09 174).

Viele andere bekannte Vorrichtungen zur Abwasserreinigung sind mit porösen Trägermaterialien gefüllt, auf denen Mikroorganismen immobilisiert sind (beispielsweise DE-OS 38 16 679).

Diese Verfahren und Vorrichtungen haben den Nachteil, daß sie durch den Einsatz von Sedimentationsbecken, Treibstrahldüsen, mehrstufigen Reaktoren mit Schüttungen aus Füllkörpern, aufwendigen Misch- und Filtereinrichtungen oder von Druckreaktoren bedeutend komplizierter, investitions- und energieaufwendiger sind.

Der Erfindung liegt die Aufgabe zugrunde, eine transportable Anlage zur aeroben biologischen Reinigung von schadstoffhaltigem Abwasser durch Mikroorganismen zu schaffen, mit der technisch unkompliziert sowie raum-,energie- und investitionsmittelsparend Abwasser gereinigt werden kann.

Erfindungsgemäß wird die Aufgabe dadurch gelöst, daß die Anlage zur kontinuierlichen aeroben biologischen Schadstoffbeseitigung von insbesondere mit Kohlenwasserstoffen verunreinigten Abwässern durch Mikroorganismen aus einem Flüssigkeitsreaktor mit einer vorgeschalteten statischen Gas-Flüssigkeits-Mischeinrichtung, von denen mehrere parallel angeordnet sein können, und einem nachgeschalteten Filtersystem für Feststoffe besteht.

Der mit einem Abluftfilter und einer Heizung ausgerüstete Flüssigkeitsreaktor weist Zuführung für Gas-Flüssigkeitsgemisch und das im Kreislauf geführte Wasser sowie einen Biomasse-Abzug und einen Wasserüberlauf auf, die über eine Rohrleitung mit zwischengeschalteter Pumpe mit einem nachgeordneten Filtersystem und einem Biomasse-Rückführungseinlaß verbunden sind.

Das nachgeschaltete Filtersystem besteht aus einer mit einem Anschwemmaterial, vorzugsweise einem organischen Stoff, ausgestatteten Kammerfilterpresse.

Zwischen dem Flüssigkeitsreaktor und dem Abluftfilter ist ein Abluftventilator angeordnet.

Die Anlage ist als eine transportable, vorzugsweise in einem Container installierte, in sich geschlossene Modulanlage gestaltet, wodurch vor Ort mehrere Modulanlagen parallel angeordnet werden können.

In der statisch Gas-Flüssigkeits-Mischeinrichtung wird das mit Kohlenwasserstoffen wie Öle, Emulgatoren und evtl. Metallen verunreinigte Abwassern mit Luft und einer Nährstofflösung vermischt, das in den Flüssigkeitsreaktor gepumpt wird. Durch das Einpumpen des Gas-Flüssigkeits-Gemisches wird der Reaktorinhalt mit dem im Kreislauf geführten Wasser und den Mikroorganismen vermischt und durch nicht gelöste Luft aus dem Zustrom belüftet.

Bei 15 bis 35 Grad C bildet sich durch die Arbeit der Mikroorganismen Biomasse, die mit eingebundenen Schadstoffen aufschwimmen oder absinken kann. Absinkende Biomasse wird am Boden mittels einer Pumpe abgezogen und alternativ dem Flüssigkeitsreaktor zur Regeneration von Biomasse wieder zugeführt oder zum nachgeschalteten Filtersystem gepumpt. Aufschwimmende Biomasse wird gemeinsam mit überlaufendem Wasser über den Wasserüberlauf abgezogen und filtriert. Das gereinigte Wasser wird in den Reinwasser-Ablauf gegeben.

Die freigesetzten Reaktionsgase werden gemeinsam mit der abströmenden Prozeßluft über einen Abluftventilator sowie einem Abluftfilter an die Umgebung abgegeben.

Zur Gewährleistung einer hohen Reinigungsleistung der Anlage kann bei Ausfall einer Gas-Flüssigkeits-Mischeinrichtung eine andere der parallel angeordneten Gas-Flüssigkeits-Mischeinrichtungen deren Leistungen übernehmen. Der Durchsatz einer Anlage beträgt zwischen 1001/h und 10 m(hoch 3)/h. Die Verweilzeiten liegen zwischen 1 h bis 100 h.

Eine Parallelschaltung mehrerer selbständiger Modulanlagen ermöglicht eine Vervielfachung der Leistung.

Die erfindungsgemäße Anlage zur kontinuierlichen aeroben biologischen Schadstoffbeseitigung von verunreinigten Abwässern wird nachfolgend anhand einer Zeichnung näher erläutert. Diese zeigt ein Verfahrensfließbild der Anlage zur aeroben biologischen Schadstoffbeseitigung verunreinigter Abwässer.

Vor Ort werden aus einem externen Schmutzwassersystem mit Kohlenwasserstoffen verunreinigte Abwässer über Feststoffilter 16, eine Nährlösung und Luft der statischen Gas-Flüssigkeits-Mischeinrichtung 2 kontinuierlich zugeführt, dort vermischt und in den Flüssigkeitsreaktor 1 gepumpt. Durch das Einpumpen dieses Gas-Flüssigkeitsgemisches 11 wird der Reaktorinhalt mit dem im Kreislauf geführten Wasser 12 und den Mikroorganismen vermischt und durch nicht gelöste Luft aus dem Zustrom belüftet.

Der Reaktorinhalt wird mittels einer Heizung (10) bei 15 bis 35 Grad C temperiert. Durch die Arbeit der Mikroorganismen werden die Verunreinigungen biologisch abgebaut und Biomasse gebildet, die mit eingebundenen Schadstoffen aufschwimmen bzw. absinken kann. Absinkende Biomasse wird am Boden durch einen Biomasse-Abzug (5) mittels einer Pumpe (8) abgezogen und dem Flüssigkeitsreaktor (1) zur Regeneration von Biomasse über die Rohrleitung (7) und dem Biomasse-Rückführungseinlaß (9) wieder zugeführt oder alternativ zum nachgeschalteten Filtersystem (3) gepumpt. Aufschwemmende Biomasse wird gemeinsam mit überlaufendem Wasser über den Wassserüberlauf (6) abgezogen und ebenfalls über die Rohrleitung (7) dem Filtersystem (3) zugeführt und dort, beispielsweise in einer mit Anschwemmaterial vorbeschickten Kammerfilterpresse (13), teilentwässert. Der abgefilterte kontaminierte Feststoff wird vorzugsweise mit einer Dickstoffpumpe (17) einer Zwischenlagerung zugeführt, wo der Restabbau der Schadstoffe stattfindet. Das gereinigte Wasser wird nach Prüfung der Anforderung in den Reinwasser-Ablauf gegeben.

Die freigesetzten Reaktionsgase werden gemeinsam mit der abströmenden Prozeßluft nach Passieren eines Abluftventilators (14) und eines Abluftfilters (4) an die Umbegung abgegeben.

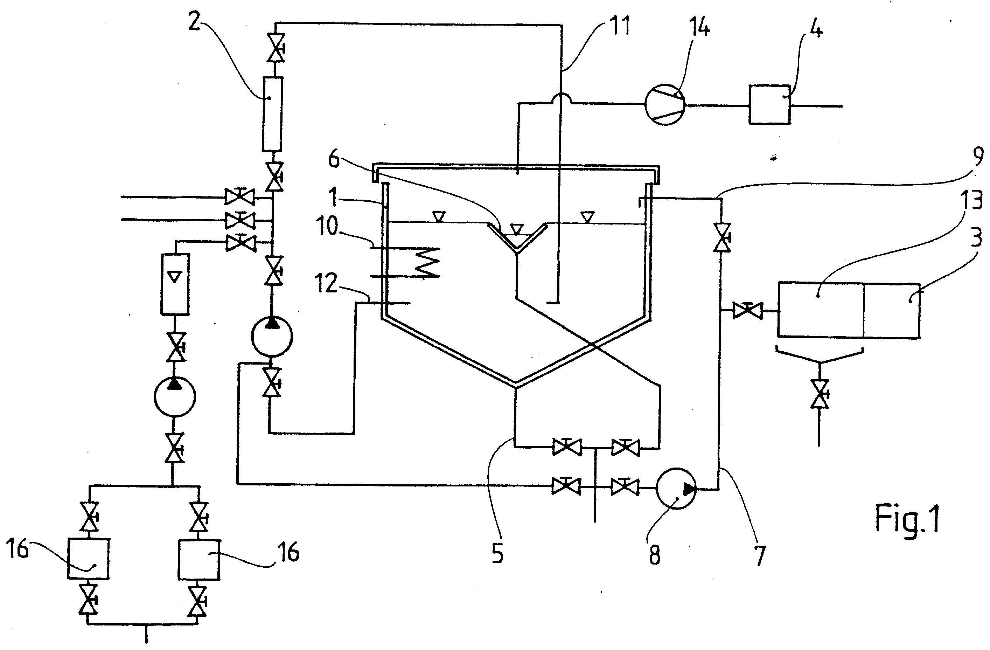

**Patentansprüche**

1. Anlage zur kontinuierlichen aeroben biologischen Schadstoffbeseitigung von insbesondere mit Kohlenwasserstoffen verunreinigten Abwässern durch Mikroorganismen, gekennzeichnet durch einen Flüssigkeitsreaktor (1) mit einer vorgeschalteten statischen Gas-Flüssigkeits-Mischeinrichtung (2) und einem nachgeschalteten Filtersystem (3) für Feststoffe.

2. Anlage nach Anspruch 1,

   **dadurch gekennzeichnet,**

   daß der mit einem Abluftfilter (4) und einer Heizung (10) ausgerüstete Flüssigkeitsreaktor (1) Zuführungen für das Gas-Flüssigkeits-Gemisch (11) und das im Kreislauf geführte Wasser (12) sowie einen Biomasse-Abzug (5) und einen Wasserüberlauf (6) aufweist.

3. Anlage nach Anspruch 1 und 2,

   **dadurch gekennzeichnet,**

   daß das nachgeschaltete Filtersystem (3) vorzugsweise aus einer mit einem Anschwemmaterial ausgestatteten Kammerfilterpresse (13) besteht.

4. Anlage nach Anspruch 1,

   **dadurch gekennzeichnet,**

   daß zwischen dem Flüssigkeitsreaktor (1) und dem Abluftfilter (4) ein Abluftventilator (14) angeordnet ist.

5. Anlage nach Anspruch 1,

   **dadurch gekennzeichnet,**

   daß mehrere statische Gas-Flüssigkeits-Mischeinrichtungen (2) parallel angeordnet sind.

6. Anlage nach Anspruch 1 bis 5,

   **dadurch gekennzeichnet,**

   daß die Anlage eine transportable, vorzugsweise in einem Container installierte, in sich geschlossene Modulanlage ist.

7. Anlage nach Anspruch 1 bis 6,

   **dadurch gekennzeichnet,**

   daß mehrere der transportablen, in sich geschlossenen Modulanlagen parallel angeordnet sind.

8. Verfahren zur kontinuierlichen aeroben biologischen Schadstoffbeseitigung von insbesondere mit Kohlenwasserstoffen verunreinigten Abwässern durch Mikroorganismen mittels einer Anlage nach einem oder mehreren der Ansprüche 1 - 7

**dadurch gekennzeichnet,**

daß im Temperaturbereich vorzugsweise zwischen 15 und 35 Grad C. gearbeitet wird bei einem Durchsatz in den Grenzen von vorzugsweise 100 l/h und 10 m (hoch 3)/h und Verweilzeiten zwischen 1 h und 100 h.

Fig.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3 834 244 (PASSAVANT-WERKE)<br>* Spalte 1, Zeile 1 - Zeile 6 *<br>* Spalte 1, Zeile 35 - Spalte 2, Zeile 9 *<br>* Spalte 3; Ansprüche 7-10 *<br>--- | 1,6 | C02F3/34<br>C02F3/12<br>C02F9/00<br>B01D25/12 |
| A | DE-A-1 609 016 (VOLKMANN, FRITZ)<br>* Seite 6; Ansprüche 1,2,4-6 *<br>* Seite 4, Zeile 35 - Seite 5, Zeile 6 *<br>--- | 1 | |
| A | GB-A-2 004 859 (AKE STIGEBRANDT)<br>* Seite 3; Anspruch 4 *<br>--- | 1,6 | |
| A | EP-A-0 252 069 (VOEST-ALPINE)<br>* Front page; Abstract *<br><br>----- | 2 | |

**RECHERCHIERTE SACHGEBIETE (Int. Cl.5 )**

C02F
B01D

Der vorliegende Recherchenbericht wurde für alle Patentansprüche erstellt

| Recherchenort | Abschlußdatum der Recherche | Prüfer |
|---|---|---|
| DEN HAAG | 01 JULI 1992 | TEPLY J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.....................................................................
& : Mitglied der gleichen Patentfamilie, übereinstimmendes Dokument

EPO FORM 1503 03.82 (P0403)